## Europäisches Patentamt

## European Patent Office

## Office européen des brevets

(19)

(11) Veröffentlichungsnummer: **0 095 583**
**B1**

(12) # EUROPÄISCHE PATENTSCHRIFT

(45) Veröffentlichungstag der Patentschrift:
**16.09.87**

(51) Int. Cl.⁴: **B 01 D 13/00**, B 01 D 13/02, C 02 F 1/44

(21) Anmeldenummer: **83104167.8**

(22) Anmeldetag: **28.04.83**

(54) **Membranstapeleinheit für Mehrkammerprozesse.**

(30) Priorität: **27.05.82 DE 3219869**
**05.02.83 DE 3303910**

(43) Veröffentlichungstag der Anmeldung:
**07.12.83 Patentblatt 83/49**

(45) Bekanntmachung des Hinweises auf die Patenterteilung:
**16.09.87 Patentblatt 87/38**

(84) Benannte Vertragsstaaten:
**AT CH DE FR GB IT LI NL SE**

(56) Entgegenhaltungen:
**DE - A - 1 642 811**
**DE - A - 2 902 247**
**DE - B - 1 926 907**
**DE - U - 8 019 427**
**DE - U - 8 035 010**
**US - A - 4 124 478**

(73) Patentinhaber: **GKSS-Forschungszentrum Geesthacht GmbH, Reaktorstrasse 7-9,**
**D-2054 Geesthacht-Tesperhude (DE)**

(72) Erfinder: **Voss, Hartwig, Dr., Aussigerstrasse 2,**
**D-2058 Lauenburg (DE)**
Erfinder: **Knelfel, Klemens, Schulstrasse 10,**
**D-2054 Geesthacht (DE)**
Erfinder: **Martens, Uwe, Im Winkel 2, D-2059 Hohnsdorf**
**(DE)**

ACTORUM AG

## Beschreibung

Die Erfindung betrifft eine Membranstapeleinheit für Mehrkammerprozesse mit Dichtungsrahmen, Endplatten sowie Membranen, die an sich gegenüberliegenden Seitenrändern korrespondierende Versorgungs- und Verbindungsbohrungen für zu behandelnde Lösungen enthalten, die am Dichtungsrahmen alternierend über Zu- und Abflussrinnen mit dem Innern der Kammern in Verbindung stehen sowie Verwendungsmöglichkeiten derselben.

Das Prinzip der Elektrodialyse, die Konstruktion eines Membranstapels für das Entsalzen einer Kochsalzlösung mit zwei Lösungsströmen sowie die Grundkonzeption eines Dichtungsrahmens sind aus der DE-A-2 902 247 bekannt. Mit dieser vorgeschlagenen Konstruktion des Membranstapels können jedoch keine Mehrkreisprozesse durchgeführt werden mit dem Ziel, aus Lösungen und Abwässern unter wirtschaftlichen Bedingungen Wertstoffe zu gewinnen bzw. durch Rückführung wiederzuverwenden oder umweltbelastende Stoffe abzutrennen, da sie nicht die Zu- und Abführung von mehr als 2 Lösungsströmen vorsieht und auch nicht durch einfache technische Massnahmen ermöglicht.

Die DE-A-2 902 247 bezieht sich auf eine Membranstapeleinheit für die Elektrodialyse mit Dichtungsrahmen, Endplatten sowie beidseitig auf den Dichtungsrahmen aufliegenden Membranen, die an zwei sich gegenüberliegenden Seiten Versorgungsbohrungen mit Schlitzen zur Führung jeweils eines Fluides durch jeweils eine Kammer und durchgehende Verbindungsbohrungen besitzen. Diese Einheit beschreibt nur ein Zweikammersystem.

Es sind weiterhin Laborapparate bekannt, bei denen die Kammern einzeln angeströmt werden. Diese Kammern sind jedoch 5 mm dick, was bei einer Erhöhung der Kammerzahl zu erheblichen Abmessungen des Membranstapels und zu Schwierigkeiten bei der Anbringung von gemeinsamen Zu- und Ableitungen führen würde.

Sind bis zu vier getrennte Ströme erforderlich, um bestimmte Aufgaben zu lösen, dann ist es zwar in einigen Fällen möglich, den Prozess in zwei nacheinander ablaufenden Schritten mit zwei in Serie geschalteten konventionellen Membranstapeln durchzuführen, der Mehraufwand ist aber erheblich durch höhere Apparatekosten und einen grösseren Energieverbrauch.

Die der Erfindung zugrundeliegende Aufgabe besteht darin, eine Membranstapeleinheit der e.g. Art so auszubilden, dass sie in einem Arbeitsgang die Abtrennung und gegebenenfalls Umwandlung mehrerer Komponenten in einer Lösung ermöglicht, also für mehr als die Elektrodialyse verwendbar ist.

Die Lösung dieser Aufgabe ist durch die Merkmale des Anspruchs 1 wiedergegeben.

Die übrigen Ansprüche zeigen vorteilhafte Weiterbildungen und Verwendungsmöglichkeiten der Erfindung auf.

Einer der wesentlichsten Vorteile der Erfindung besteht darin, dass mit jeweils einem einzigen Typ von Dichtungs- und Umlenkrahmen und Endplatte Membranstapel (auch wiederholt hintereinanderliegend) erstellt werden können, die Trenn- und Umwandlungsaufgaben durchführbar machen, die bis zu 4 voneinander unabhängige Lösungsströme erfordern. Hierdurch wird es möglich, u.a. umweltbelastende Stoffe aus Lösungen zu trennen, wie sie bei der Metalloberflächenbehandlung und der chemischen Verfahrenstechnik anfallen.

Die Erfindung ermöglicht demnach in einem Arbeitsgang die Abtrennung und gegebenenfalls Umwandlung mehrerer in Wasser gelöster Komponenten dadurch, dass in einem Membranstapel bis zu vier verschiedene Flüssigkeitsströme gefahren werden können, die durch eine geeignete — dem Prozess angepasste — Kombination von Membranen (Kationenaustauscher-, Anionenaustauscher- und Neutralmembranen) getrennt sind. Der Stofftransport durch die Membranen kann dabei durch elektrische Überführung und Diffusion bzw. Dialyse erfolgen, sowohl gleichzeitig als auch jeweils allein. Dazu sind spezielle Dichtrahmen, Endplatten und Umlenkkonzepte zur Verlängerung des Verfahrensweges entwickelt worden.

Die Erfindung wird im folgenden anhand von Ausführungsbeispielen für die Membranstapeleinheit und deren Verwendungen mittels der Fig. 1–10 näher erläutert.

Hierbei zeigen die

Fig. 1 eine Aufsicht eines Dicht- bzw. Dichtungsrahmens für eine Kammer,

Fig. 2 die Stapelung der Dichtrahmen,

Fig. 3 eine Aufsicht auf eine Endplatte,

Fig. 4 einen Schnitt durch eine Endplatte,

Fig. 5 ein Schema der Stapeleinheit,

Fig. 6 ein Schema einer 4-Kammer-Einheit,

Fig. 7 die Wege zweier Lösungen,

Fig. 8 den Zweistrom-Gegenstrom-Fall,

Fig. 9 eine interne Umlenkung in der Stapeleinheit und

Fig. 10 ein Beispiel für die Elektrometathese.

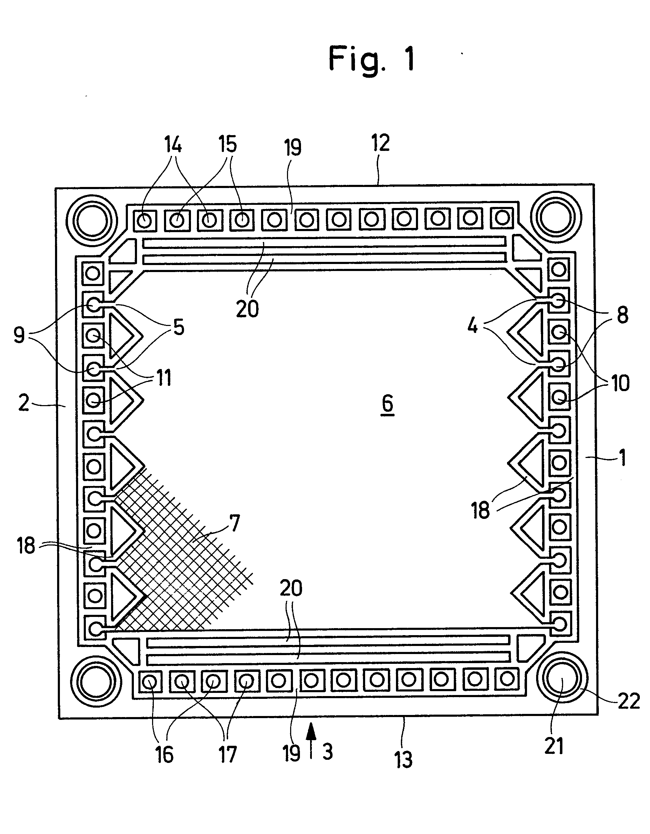

Die verwendeten, einheitlichen Dichtungsrahmen gehen von der, wie bereits erwähnt, in der DE-A-2 902 247 beschriebenen Grundkonzeption aus. An den sich gegenüberliegenden Seitenrändern 1 und 2 (Fig. 1) des quadratischen Dichtungsrahmens 3 ist eine Mehrzahl Schlitze 4, 5 vorgesehen, die für die Zufuhr und die Abfuhr von Lösung in die vom Dichtungsrahmen 3 umfasste Kammer 6 sorgen. Die Schlitze 4, 5 liegen jeweils zueinander versetzt an den Seitenrändern 1, 2. Die Schlitze 4, 5 führen als relativ enge Kanäle in das Innere des Dichtungsrahmens 3, welcher als Abstandshalter für beidseitig aufzulegende Membranen ein eingesetztes netzförmiges Gewebe 7 enthält. Die Kanäle divergieren unter einem Winkel von 90°, so dass eine zick-zack-förmige Konfiguration der Kammerbegrenzung entsteht.

Die Schlitze 4, 5 stehen mit den Versorgungs- und Verbindungsbohrungen 8, 9 in Verbindung, die die entsprechenden Zu- und Abflusskanäle zu den einzelnen Kammern bilden. Diese gehen durch den Dichtrahmen 3 hindurch und korrespondieren mit Bohrungen der Membranen und Endplatten. Neben den Bohrungen 8, 9 sind abwechselnd weitere Versorgungs- und Verbindungsbohrungen 10, 11 vorgesehen, die lediglich durch die Seitenränder hindurchtreten und mit einer anderen Kammer in Verbindung gebracht werden können.

Die beiden übrigen Seitenränder 12, 13 des Dichtungsrahmens 3 weisen weitere durchgehende Versorgungs- und Verbindungsbohrungen 14, 15 bzw. 16, 17 auf, die wiederum Zu- und Abfuhrleitungen für weitere Lösungsströme (1 oder 2 weitere) bilden und zu Dichtungsrahmen führen, die um 90° bzw. 270° zum dargestellten versetzt in der Membranstapeleinheit liegen. Sie werden jeweils über die Schlitze 4 und 5 mit anderen Kammern verbunden.

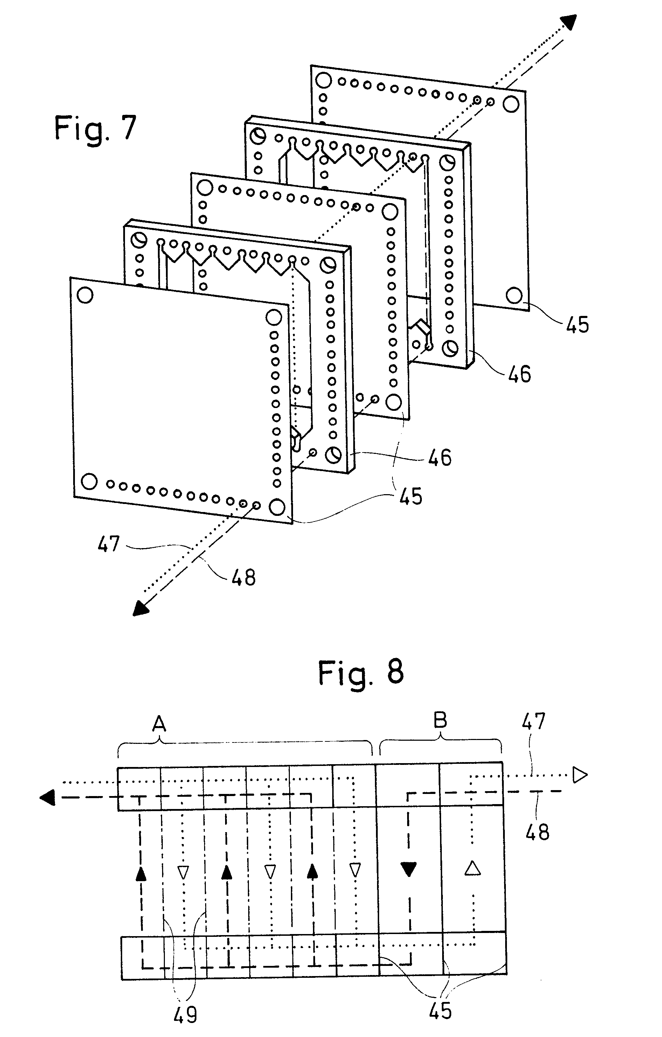

Alle Bohrungen 8 bis 11, 14 bis 17 und Schlitze 4, 5 werden von Dichtmaterialbeschichtungsteilen 18–20 gegeneinander bzw. gegen den Innenraum der Kammer 6 und die Umgebung sowie die Umlenkrahmen (siehe Fig. 7) bei der Zusammenfassung von Membranen und Endplatten zur Membranstapeleinheit abgedichtet. Die Bohrungen 21 und Dichtungen 22 an den Ecken des Dichtungsrahmens 3 dienen zur Aufnahme durchgehender Halteelemente.

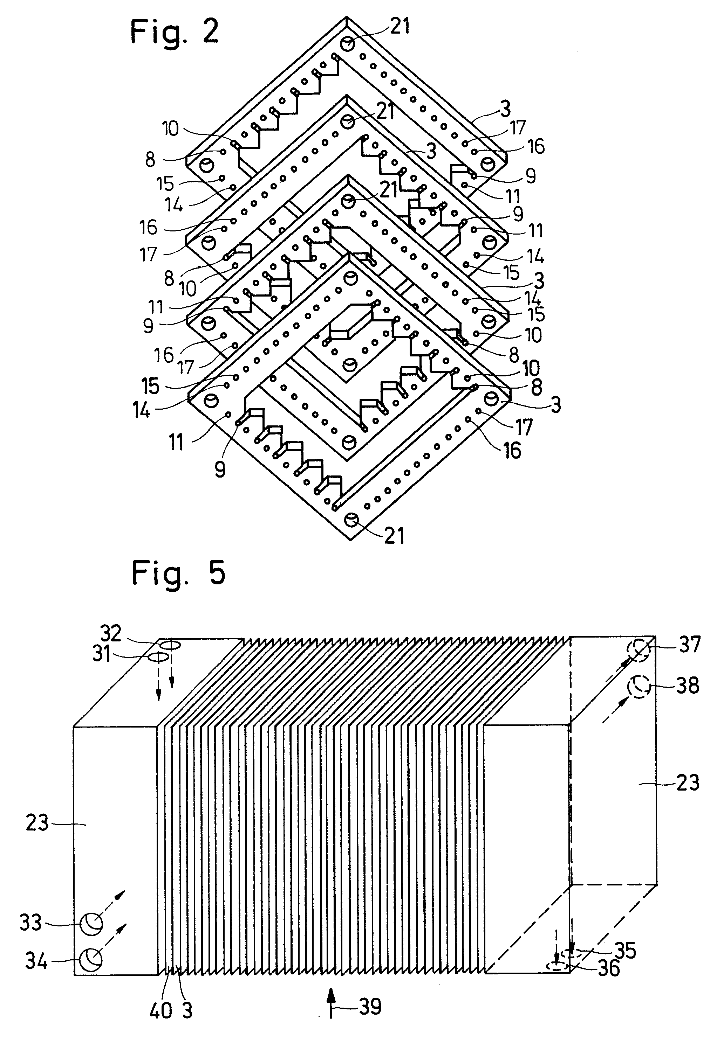

In der Fig. 2 ist die geometrische Anordnung von vier Dichtungsrahmen 3 dargestellt. Aus ihr sind auch der Verlauf und die Anbindung der einzelnen Versorgungs- und Verbindungsbohrungen 8–11, 14–17 an die Kammern, wie bereits beschrieben, zu entnehmen.

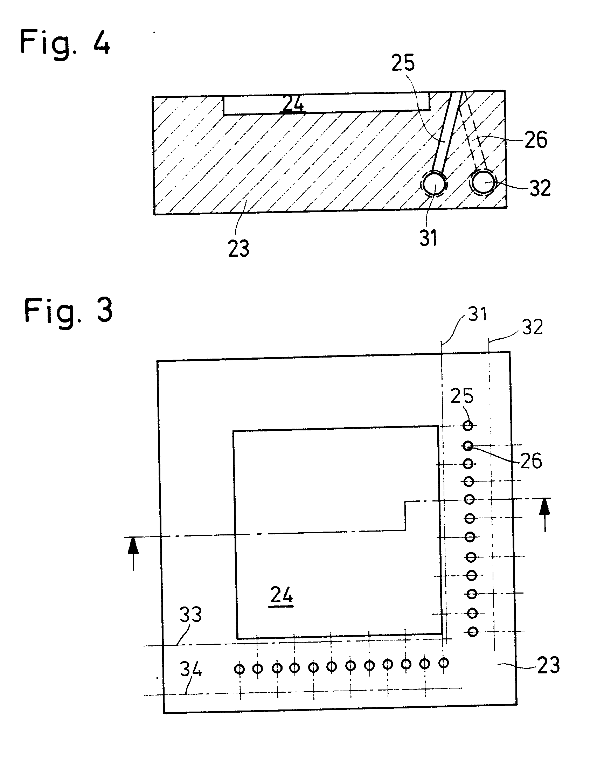

Die Figur 3 zeigt eine der beiden zu verwendenden Endplatten 23. Sie weist eine mit einer danebenliegenden Membran eine Kammer bildende Ausnehmung 24 auf. In zwei aneinander angrenzenden Seiten sind ebenfalls Bohrungen 25–28 eingefügt, die mit den Bohrungen 8–11, 14–17 korrespondieren.

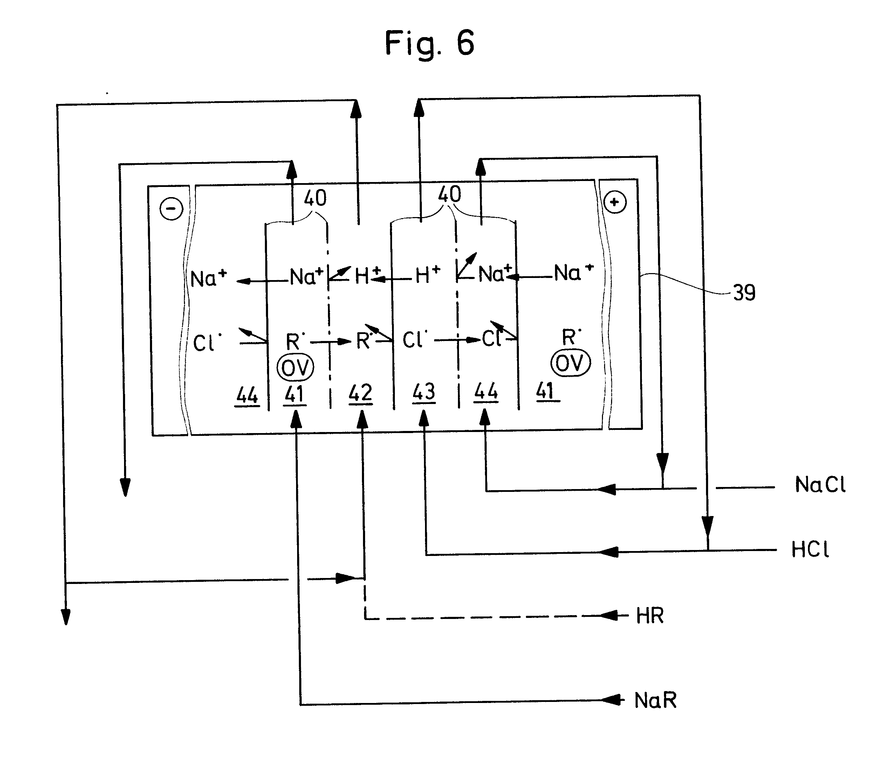

Die Bohrungen 25–28 stehen schräg (siehe Fig. 4) mit ihren jeweiligen Lösungseintritts- bzw. austrittssammelkanälen 31–38 der Endplatte 23 (siehe Fig. 5) in Verbindung. Diese treten an der Oberfläche der Membranstapeleinheit 39 bzw. aus den Endplatten 23 aus (Dichtrahmen 3 und Membranen 40 sind schematisch in der Fig. 5 mit dargestellt).

Die Fig. 6 zeigt nunmehr ein Verwendungsbeispiel der Membranstapeleinheit 39 mit den einzelnen Kammern 41–44, die von den Membranen 40 abgeteilt werden, zur Behandlung eines chemischen Reaktionsgemisches, das neben dem Natriumsalz einer organischen Säure (NaR) nichtionische Verunreinigungen (OV) enthält und von diesen befreit, konzentriert und in freie Säure umgewandelt werden soll. In diesem 4-Kreislauf-Membranstapel werden alternierend mindestens 3 Kationenaustauscher- und 2 Anionenaustauschermembranen 40, angeordnet. Man erhält so eine 4-Kammer-Einheit.

Solche Einheiten können durch einfaches Aneinanderreihen vervielfältigt werden. Für die Praxis kommen Membranstapel mit 10 bis 100 parallelen Einheiten in Frage.

In die 4 Kreisläufe werden über Zuführungen zu den Kammern 41–44 folgende Lösungen eingespeist:

41 – Reaktionsgemisch (enthält NaR und nichtionische organische Verunreinigungen OV)
42 – verdünnte organische Säure
43 – Salzsäure (HCl)
44 – Natriumchloridlösung (NaCl)

Nach Anlegen der elektrischen Spannung ergeben sich folgende Transportvorgänge in den Kammern 41–44:

41 – Die Natriumionen ($Na^+$) und die Säurerestionen ($R^-$) wandern in die Kammern 44 bzw. 42. Die Lösung wird entsalzt und enthält nur noch die nichtionischen organischen Verunreinigungen OV, die im elektrischen Feld nicht transportiert werden.

42 – In diese Kammer hinein wandern die $R^-$-Ionen aus Kammer 41 und die Wasserstoffionen ($H^+$) aus der Kammer 43. Es entsteht eine reine organische Säure (HR), die durch teilweise Rückführung (Kreislauf) höher aufkonzentriert werden kann.

43 – Die in dieser Kammer befindliche Säure liefert die $H^+$-Ionen für die in Kammer 42 zu bildende Säure. Die Chloridionen ($Cl^-$) werden in die Kammer 44 transportiert.

44 – Hier entsteht eine konzentrierte Natriumchlorid-(NaCl)-Lösung aus den $Cl^-$-Ionen von Kammer 43 und den $Na^+$-Ionen der benachbarten Kammer 41.

Die Konzentration der Natriumchlorid-Lösung sollte einen bestimmten Wert (etwa 20%) nicht überschreiten. Dies erreicht man entweder durch kontinuierliche Wasserzugabe (eventuell kann die entsalzte Lösung aus Kammer 41 dazu benutzt werden) oder durch diskontinuierliches Auswechseln der konzentrierten Lösung.

Als Ergebnis wird eine gereinigte, konzentrierte organische Säure und als Neben- bzw. Abfallprodukte eine konzentrierte Natriumchlorid-Lösung und eine entsalzte Lösung mit organischen Verunreinigungen erhalten. Als weitere Anwendungsmöglichkeit für eine 4-Kammer-Einheit kommt z.B. die Aufarbeitung von Kochlösungen in Frage, die bei der Papierherstellung anfallen.

Für die interne Umlenkung der Lösungsströme im Membranstapel erfolgt die Verlängerung des Verfahrensweges durch Umlenkeinheiten (siehe Fig. 7), die für n Lösungsströme durch n + 1 undurchlässige Kunststoffmembranen bzw. -platten 45 und n dazwischen angeordneten Umlenkrahmen 46 gebildet werden. In Fig. 7 sind die Wege 47, 48 zweier Lösungen eingezeichnet.

Als Umlenkrahmen 46 werden Rahmen der gleichen Geometrie wie die Dichtungsrahmen 3, aber mit einer grösseren Dicke eingesetzt, die z.B. für den Zweistrom-Gegenstrom-Fall um 180° gegeneinander verdreht sind. Gesteuert wird die Umlenkung durch die Lösungsein- und austrittsschlitze der Umlenkkammer 46 und die beiden äusseren Membranplatten 45 der Umlenkeinheit, die nur Durchgangsbohrungen an zwei benachbarten Seiten des Quadrates aufweisen, aber um 180° gegeneinander verdreht angeordnet sind.

Fig. 8 zeigt für den Zweistrom-Gegenstrom-Fall eine Trennstufe A mit permeablen Membranen 49 sowie einer angrenzenden Umlenkeinheit B mit undurchlässigen Membranen 45. Die Anzahl der Trennstufen pro Stapel beträgt bei m Umlenkeinheiten B m + 1 und richtet sich nach dem erforderlichen Verfahrensweg. Pro Stufe lassen sich 2 bis 200 Dichtungsrahmen 3 einsetzen.

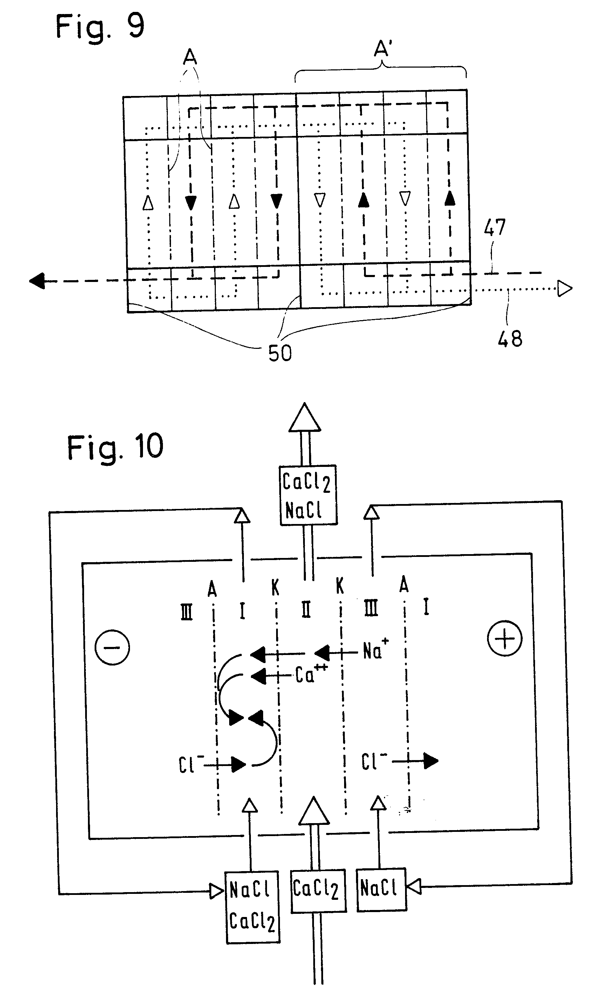

Die interne Umlenkung ist auf eine noch einfachere Weise möglich, allerdings kehrt sich bei diesem direkten Umlenkonzept die Strömungsrichtung der Lösungswege 47, 48 in den Kammern zweier aufeinanderfolgender Trenneinheiten A und A′ um (Fig. 9). Erreicht wird die Umlenkung durch den Einsatz einer undurchlässigen Kunststoffmembran 50 zwischen den Trennstufen A, A′, die nur Durchgangsbohrungen an zwei benachbarten Seiten des Quadrates aufweist und jeweils gegenüber der nächsten um 180° verdreht angeordnet ist.

Es besteht auch die Möglichkeit, statt der undurchlässigen eine permeable Membran einzusetzen. Nur in diesem Fall erhält man einen Stapel, der die elektrische Überführung von Ionen erlaubt.

Beispiel für die Elektrometathese:

Es soll die ionale Zusammensetzung der Kationen bzw. Anionen in einer Lösung aus $CaCl_2$ verändert werden, ohne den Gesamtelektrolytgehalt wesentlich zu beeinflussen. Gelöst wird das Problem mit einer Dreistromausführung gem. Fig. 10 des Membranstapels und folgenden sich wiederholenden Membrananordnungen: Hierbei bedeuten (K = Kationenaustauschermembran, A = Anionenaustauschermembran).

Kationenaustausch: A, K, K

Anionenaustausch: K, A, A

Zwischen den beiden Kationenaustauschermembranen K befindet sich die Prozesslösung II, deren Kationenzusammensetzung geändert werden soll. Bei angelegtem elektrischen Feld werden aus der angrenzenden Donatorlösung III Kationen in die Prozesslösung II transportiert, deren Konzentration erhöht werden soll, und in gleichem Masse Kationen, deren Konzentration erniedrigt werden soll, aus der Prozesslösung II in die andere angrenzende Lösung (Akzeptorlösung I) überführt.

Beispiel für die Dialyse

Es soll eine mit Salz verunreinigte Säure (z.B. Beizsäure oder Säure, die beim Regenerieren von Kationenaustauschern anfällt), gereinigt werden, ohne die Säure wesentlich zu verdünnen, wobei eine Einheit gemäss Fig. 8 oder 9 verwendbar ist.

Gelöst wird das Problem mit einer Zweistromanordnung des Membranstapels, dessen Verfahrensweg durch interne Umlenkung der Lösungen verlängert sein kann, und den Einsatz von Dialysemembranen, die Säure durchlassen und Salze zurückhalten.

Beschreibung des Dialyseprozesses:

Im Gegenstrom wird zum einen die verunreinigte Säure und zum anderen Wasser durch den Membranstapel geschickt. Die Säure diffundiert dabei durch die für sie durchlässigen Membranen in das Wasser und es wird als Produkt eine Säure erhalten, deren Konzentration etwas niedriger als die der verunreinigten Säure ist. Weiter wird eine saure Lösung des Salzes gewonnen.

Es können mit einem Dichtungs-, End- und Umlenkrahmentyp Membranstapel erstellt werden, die es erlauben, Trenn- und Umwandlungsaufgaben mittels Elektrodialyse, Elektrometathese und Dialyse durchzuführen, die 2, 3 oder 4 Lösungsströme erfordern, wobei die Strömungsrichtung in benachbarten Kammern je nach Anordnung der Dichtrahmen und der Anzahl der Lösungsströme parallel und/oder um 90° gegeneinander verschoben ist.

Unter Hinzunahme der beschriebenen Umlenkkonzepte werden Membranstapel mit einem verlängerten Verfahrensweg, die besonders für den Dialyseprozess geeignet sind, erhalten.

**Patentansprüche**

1. Membranstapeleinheit für Mehrkammerprozesse der Elektrodialyse, Dialyse und/oder Elektrometathese mit Dichtungsrahmen, Endplatten sowie beidseitig auf den Dichtungsrahmen (3) aufliegenden Membranen (40, 49), die an den Seitenrändern Versorgungs- und Verbindungsbohrungen (8–11, 14–17) derart aufweisen, dass zwei, drei oder vier zu behandelnde Lösungen durch den Membranstapel führbar sind, wobei bei jedem Dichtungsrahmen (3) die an zwei sich gegenüberliegenden Seiten befindlichen Versorgungs- und Verbindungsbohrungen Schlitze zur Führung jeweils eines Fluides durch jeweils eine Kammer besitzen, auf zwei anderen gegenüberliegenden Seiten lediglich durchgehende Verbindungsbohrungen vorhanden sind, die Versorgungs- und Verbindungsbohrungen (8–11, 14–17) auf Seitenrändern (1, 2, 12, 13) gleicher Länge, insbesondere eines Quadrates, liegen und die Dichtungsrahmen (3) alle von gleicher Bauart und hintereinander jeweils um 90°, 180° oder 270° versetzt angeordnet sind.

2. Membranstapeleinheit nach Anspruch 1, dadurch gekennzeichnet, dass ihr eine Umlenkeinheit zugeordnet ist, die aus undurchlässigen Membranen bzw. Platten (45) und dazwischen angeordneten Umlenkrahmen (46) gleicher Geometrie, aber grössere Dicke als die der Dichtungsrahmen (3) besteht.

3. Membranstapeleinheit nach Anspruch 1 und 2, dadurch gekennzeichnet, dass die durchgehenden Versorgungs- und Verbindungsbohrungen (8–11, 14–17) mit Dichtmaterialbeschichtungen (18–20) gegeneinander und gegen die Umgebung abgedichtet sind.

4. Verwendung der Membranstapeleinheit gemäss Anspruch 1, 2 oder 3 für die Abtrennung von nichtionischen Verunreinigungen aus einem eine organische Säure enthaltenden Salz, Konzentrierung des Salzes und Umwandlung in die freie Säure.

## Claims

1. Membran stack assembly for multichamber processes of electrodialysis, dialysis and/or electrometathesis with sealing frames, and plates and membranes (40, 49) resting on both sides of the sealing frames (3) with supply and connecting bores (8–11, 14–17) on the lateral edges in such a way that two, three or four of the solutions to be treated can be conducted through the membrane stack, with slots to conduct one fluid each through one chamber each provided in the supply and connecting bores on two opposed faces of each sealing frame (3), whereas only continuous connecting bores are provided on two other opposed faces with the supply and connecting bores (8–11, 14–17) lying on lateral edges (1, 2, 12, 13) of identical length, especially square shaped, and all the sealing frames (3) being of the same type and arranged one behind the other, staggered by 90°, 180° or 270°.

2. Membrane stack assembly defined in Claim 1, with a deflector unit assigned to it which consists of impermeable membranes and plates (45), respectively and deflector frames (46) provided inbetween which have the same geometry as, but a greater thickness than the sealing frames (3).

3. Membrane stack assembly as defined in Claims 1 and 2 with the continuous supply and connecting bores (8–11, 14–17) sealed with respect to each other and with respect to the surrounding by sealing material coatings (18–20).

4. Use of the membrane stack assembly as defined in Claim 1, 2 or 3 for separating non-ionized impurities from a salt containing an organic acid, concentration of the salt, and conversion into free acid.

## Revendications

1. Ensemble d'empilages de membranes pour des procédés à chambres multiples dans l'électrodialyse, la dialyse et/ou l'électrométathèse, avec châssis d'étanchéité, plaques d'extrémité et membranes (40, 49) posées de deux côtés sur le châssis d'étanchéité (3) et qui présentent sur leurs bords latéraux des perçages d'alimentation et de communication (8–11, 14–17) caractérisés en ce que deux, trois ou quatre solutions à traiter peuvent être dirigées à travers la pile de membranes, les perçages d'alimentation et de communication situés sur deux faces opposées de chaque châssis d'étanchéité (3) possédant des fentes pour conduire chaque fluide à travers la chambre respective, tandis que sur deux autres faces opposées, il n'y a que des perçages de communication traversants, que les perçages d'alimentation et de communication (8–11, 14–17) se trouvent sur des bords latéraux (1, 2, 12, 13) de longueur identique, en particulier d'un carré, et que les châssis d'étanchéité (3) sont tous du même type et disposés les uns derrières les autres, décalés de 90° resp. 180° ou 270°.

2. Ensemble d'empilages de membranes selon la revendication 1, caractérisé en ce qu'un dispositif de déviation lui est associé qui se compose de membranes ou resp. de plaques (45) imperméables et d'un châssis de déviation (46) intercalé de même géométrie, mais d'une épaisseur supérieure à celle des châssis d'étanchéité (3).

3. Ensemble d'empilages de membranes selon les revendications 1 et 2, caractérisé en ce que les perçages d'alimentation et de communication traversants (8–11, 14–17) sont étanchés les uns contre les autres et contre l'environnement par des revêtements en matériaux d'étanchéité (18–20).

4. Utilisation de l'ensemble d'empilages de membranes selon les revendications 1, 2 ou 3 pour la séparation d'impuretés non-ioniques à partir d'un sel contenant un acide organique, concentration du sel et transformation dans l'acide libre.

# Fig. 1

# Fig. 2

# Fig. 5

# Fig. 4

# Fig. 3

# Fig. 6

0 095 583

Fig. 7

45

46

46

45

47

48

Fig. 8

A          B          47

48

49          45

# Fig. 9

# Fig. 10

17